# EUROPÄISCHE PATENTSCHRIFT

(11) **EP 4 161 802 B1**
(45) Veröffentlichungstag und Bekanntmachung des Hinweises auf die Patenterteilung: **03.04.2024**
(21) Anmeldenummer: 21729442.0
(22) Anmeldetag: 25.05.2021
(51) Int. Cl.: H05B 47/115, B60Q 1/14, B60Q 1/08, B60Q 1/24, G06V 20/56, G06V 40/10, H05B 47/165

(54) **VERFAHREN UND VORRICHTUNG ZUR DURCHFÜHRUNG EINER WILLKOMMENSILLUMINATION**
METHOD AND DEVICE FOR PERFORMING A WELCOMING ILLUMINATION
PROCÉDÉ ET DISPOSITIF POUR METTRE EN OEUVRE UN ÉCLAIRAGE DE BIENVENUE

(30) Priorität: 09.06.2020 DE 102020207188
(43) Veröffentlichungstag der Anmeldung: 12.04.2023
(73) Patentinhaber: VOLKSWAGEN AKTIENGESELLSCHAFT, 38440 Wolfsburg (DE)
(72) Erfinder: STURMAT, Sandra, 38102 Braunschweig (DE); HOPPEN, Franziska, 39104 Magdeburg (DE); NIAN, Koukou, 38446 Wolfsburg (DE)
(86) Internationale Anmeldenummer: PCT/EP2021/063821
(87) Internationale Veröffentlichungsnummer: WO 2021/249756

(56) Entgegenhaltungen:
- EP-B1- 1 285 812
- WO-A1-2019/201553
- DE-A1-102006 017 234
- DE-A1-102010 019 829
- DE-A1-102012 220 696
- DE-A1-102012 224 465
- DE-A1-102013 224 152
- DE-A1-102014 213 414
- DE-A1-102016 102 809
- DE-A1-102017 110 232
- DE-A1-102017 124 304
- DE-A1-102018 202 700
- DE-A1-102019 101 796
- DE-A1-102019 111 480
- DE-A1-102019 129 397
- DE-B4-102010 019 829
- DE-T5-112014 002 482
- FR-A1- 3 067 478
- JP-A- 2008 149 784
- KR-A- 20140 079 920
- KR-A- 20150 019 342
- KR-A- 20160 091 585
- US-A1- 2006 232 987
- US-A1- 2017 129 394

## Beschreibung

Die vorliegende Erfindung betrifft ein Verfahren und eine Vorrichtung zur Durchführung einer Willkommensillumination an einem Kraftfahrzeug.

Moderne Fahrzeuge besitzen diverse Sensoren und Vorrichtungen zur Ausgabe und Darstellung von Informationen, die es dem Benutzer erlauben, in gewissen Grenzen mit dem Fahrzeug berührungslos zu interagieren. In diesem Zusammenhang sind beispielsweise Gestensteuerungen von fahrzeugeigenen Peripheriegeräten zu nennen, die eine berührungslose Steuerung dieser Peripheriegeräte erlauben. Auch beim Zustieg und mithin vor dem eigentlichen Beginn einer Fahrt, sind Verfahren und Vorrichtungen zur sensorbasierten Steuerung bekannt. Hierzu zählt beispielsweise der schlüssellose Zustieg in das Fahrzeug, wozu das Fahrzeug mittels geeigneter Sensoren registriert, ob sich ein autorisierter Benutzer in unmittelbarer Nähe des Kraftfahrzeugs befindet und zusteigen will. In diesem Fall werden automatisch die Türen entriegelt, so dass der autorisierte Benutzer zusteigen kann, ohne zuvor aktiv das Fahrzeug entriegeln zu müssen.

Die zunehmenden Möglichkeiten mit dem Kraftfahrzeug zu interagieren hat den Wunsch beim Verbraucher geweckt, dass solche Kraftfahrzeuge durch eine geeignete Außenbeleuchtung "menschlicher" wirken, was eine Interaktion vereinfacht. In DE 10 2014 213 414 A1 wird beispielsweise eine Scheinwerferanordnung beschrieben, die menschliche Augen imitiert, wodurch sich die Option einer Interaktion ergibt, wobei die Scheinwerfer zur Kommunikation mit anderen Verkehrsteilnehmern ausgebildet sind. Hiermit sind die Möglichkeiten einer vermenschlichten Ausgestaltung eines Kraftfahrzeugs bei weitem noch nicht ausgeschöpft. Ferner sind nach dem Stand der Technik DE 10 2013 224 152 A1, DE 10 2012 224 465 A1, KR 2016 0091585 A, FR 3 067 478 A1, US 2017/129394 A1, DE 10 2018 202 700 A1, DE 10 2012 220 696 A1, WO 2019/201553 A1, DE 10 2017 124 304 A1, JP 2008 149784 A, KR 2015 0019342 A, KR 2014 0079920 A, DE 11 2014 002 482 T5, DE 10 2019 101 796 A1, DE 10 2006 017 234 A1 und DE 10 2010 019 829 A1 bekannt, worin zumindest teilweise bewegliche Fahrzeugbeleuchtungen beschrieben sind. DE 10 2013 224 152 A1 offenbart insbesondere die Merkmale des Oberbegriffs des Anspruchs 1.

Es ist daher die Aufgabe der vorliegenden Erfindung, ein Verfahren und eine Vorrichtung anzugeben, die eine menschlich anmutende Willkommensillumination erlauben.

Diese Aufgabe wird durch das Verfahren nach Anspruch 1 und durch das Kraftfahrzeug nach Anspruch 7 gelöst.

Im Rahmen des erfindungsgemäßen Verfahrens ist vorgesehen, dass die Willkommensillumination mit den Scheinwerfern des Kraftfahrzeugs durchgeführt wird, die jeweils ein schwenkbares Beleuchtungsmodul aufweisen, deren Form zumindest im illuminierten Zustand menschliche Augen imitieren. Hierzu wird zunächst eine Autorisierungszone mit einem vorgebbaren Umkreis um das Fahrzeug definiert. Mittels einer Autorisierungsvorrichtung wird anschließend registriert, ob sich innerhalb der definierten Autorisierungszone mindestens ein autorisierter Benutzer befindet. Eine solche Autorisierungsvorrichtung kann beispielsweise aus einem fahrzeugeigenen Sensor bestehen, der registriert, ob ein Benutzer innerhalb der Autorisierungszone einen kontaktlosen Schlüssel besitzt und somit zugangsberechtigt ist. Alternativ ist als Autorisierungsvorrichtung auch eine Kameravorrichtung mit einer Gesichtserkennung oder dergleichen denkbar. Sobald ein autorisierter Benutzer innerhalb der Autorisierungszone registriert wird, startet eine erste Illuminationssequenz der Willkommensillumination, bei der die Beleuchtungsmodule mit Bezug auf ein Fahrzeugkoordinatensystem aus einer nach unten (d.h. in die negative z-Richtung) ausgerichteten Ruheposition in eine horizontal (d.h. in die positive x-Richtung) ausgerichtete Fahrposition schwenken. Unter einem Fahrzeugkoordinatensystem ist dabei ein kartesisches und rechtshändiges Koordinatensystem zu verstehen, dessen x-Achse in Fahrtrichtung ausgerichtet ist. Hierdurch wird dem Betrachter der Eindruck vermittelt, dass das Kraftfahrzeug seine Augen öffnet und mithin aufwacht. Ferner wird mittels einer geeigneten Vorrichtung die Position des autorisierten Benutzers innerhalb der Autorisierungszone und mit Bezug auf das Fahrzeugkoordinatensystem bestimmt. Im Wesentlichen wird dabei festgestellt, aus welcher Richtung sich der autorisierte Benutzer dem Kraftfahrzeug nähert. In Abhängigkeit dieser Position wird eine zweite Illuminationssequenz der Willkommensillumination gestartet, bei der die Beleuchtungsmodule zunächst in die Richtung des registrierten autorisierten Benutzers schwenken und anschließend in die horizontal und nach vorne ausgerichtete Fahrposition zurückschwenken. Vor dem Zurückschwenken des Beleuchtungsmoduls verharrt das Beleuchtungsmodul vorzugsweise in der verschwenkten Position, bevor das Beleuchtungsmodul in die nach vorne ausgerichtete Fahrposition zurückschwenkt. Hierdurch wird dem Benutzer der Eindruck vermittelt, dass das Kraftfahrzeug dem Benutzer unmittelbar anschaut und damit begrüßt, wodurch die menschlich anmutende Willkommensillumination abgeschlossen ist.

Im Rahmen des erfindungsgemäßen Kraftfahrzeugs ist vorgesehen, dass das Kraftfahrzeug Scheinwerfer besitzt, die jeweils ein schwenkbares Beleuchtungsmodul aufweisen, die im illuminierten Zustand menschliche Augen imitieren und eingerichtet sind, um während einer ersten Illuminationssequenz einer Willkommensillumination mit Bezug auf ein Fahrzeugkoordinatensystem aus einer nach unten gerichteten Ruheposition in eine horizontal ausgerichtete Fahrposition zu schwenken. Hierbei wird im Rahmen einer bevorzugten Ausgestaltung der Erfindung das Beleuchtungsmodul um einen vertikal ausgerichteten Winkel von mindestens 3°, vorzugsweise von mindestens 6° verschwenkt. Ferner sind die Beleuchtungsmodule eingerichtet, um während einer zweiten Illuminationssequenz der Willkommensillumination in die Richtung eines registrierten und autorisierten Benutzers zu schwenken. Dabei wird im Rahmen einer vorteilhaften Ausgestaltung der Erfindung ein horizontaler Schwenkwinkel von ±9° überstrichen. Abschließend sind die Beleuchtungsmodule eingerichtet, um in die horizontal und nach vorne ausgerichtete Fahrposition zurückzuschwenken.

Bevorzugte Ausführungsformen der vorliegenden Erfindung werden nachfolgend und mit Bezug auf die Unteransprüche beschrieben.

Im Rahmen einer ersten vorteilhaften Ausführungsform der Erfindung ist vorgesehen, dass die Autorisierungszone eine äußere Zone aufweist und die erste Illuminationssequenz startet, wenn der autorisierte Benutzer innerhalb der äußeren Zone registriert wird. Darüber hinaus besitzt die Autorisierungszone eine innere Zone, die vollständig innerhalb der äußeren Zone liegt, wobei die zweite Illuminationssequenz startet, wenn der autorisierte Benutzer innerhalb der inneren Zone registriert wird. Hierdurch wird der Übergang zwischen der ersten Illuminationssequenz, die das Aufwachen des Kraftfahrzeugs darstellt, und der zweiten Illuminationssequenz, die die Begrüßung des Benutzers darstellt, in die Länge gezogen, weil die zweite Illuminationssequenz erst dann startet, wenn der angesprochene Benutzer die äußere Zone vollständig durchschritten hat. Auch hierdurch wird der optische Eindruck der Willkommensillumination vermenschlicht.

Nach einer besonders bevorzugten Ausgestaltung der Erfindung ist vorgesehen, dass die innere Zone zwei Bereiche aufweist, nämlich einen Bereich, der linksseitig des Kraftfahrzeugs angeordnet ist, und einen Bereich, der rechtsseitig des Kraftfahrzeugs angeordnet ist. Vor und hinter dem Fahrzeug sind diese Bereiche zumindest geringfügig voneinander beabstandet, so dass ein Verschwenken der Beleuchtungsmodule gemäß der zweiten Illuminationssequenz blockiert wird, sofern sich der Benutzer direkt von vorne und/oder direkt von hinten an das Fahrzeug annähert. Erst wenn der autorisierte Benutzer sich für eine Richtung - also links oder rechts entlang des Fahrzeugs - entscheidet, beginnt die zweite Illuminationssequenz, bei der die Beleuchtungsmodule in die Richtung verschwenkt werden, in die sich der autorisierte Benutzer bewegt.

Im Rahmen einer alternativen und bevorzugten Ausgestaltung der Erfindung kann die zweite Illuminationssequenz der Willkommensillumination nach einer vorgebbaren Zeitspanne starten, nachdem die erste Illuminationssequenz der Willkommensillumination abgeschlossen ist. Der Verfahrensablauf und die sukzessive Durchführung der ersten und zweiten Illuminationssequenz ist in diesem Fall unabhängig von der Definition einer inneren Zone. Gleichwohl wird dennoch die Position des autorisierten Benutzers festgestellt/registriert, so dass das Beleuchtungsmodul während der zweiten Illuminationssequenz in die Richtung des autorisierten Benutzers schwenkt.

Ergänzend zu der Willkommensillumination mittels der schwenkbeweglich gelagerten Beleuchtungsmodule ist im Rahmen einer bevorzugten Ausgestaltung der Erfindung vorgesehen, dass die erste Illuminationssequenz der Willkommensillumination das Anschalten und Hochdimmen eines Positionslichts umfasst, wobei das Positionslicht Lichtumfänge und eine Umrahmung der Beleuchtungsmodule aufweist. Die Lichtumfänge umringen die Beleuchtungsmodule vollständig oder teilweise oder weisen eine zu den Seiten des Kraftfahrzeugs hin offene V-Form auf. Die Umrahmung der Beleuchtungsmodule umgreift die Beleuchtungsmodule vollständig oder zumindest teilweise. Beide Bestandteile des Positionslichts verstärken den Eindruck von menschlichen Augen. Die Lichtumfänge umrahmen zumindest abschnittsweise analog zu den Ober- und Unterlidern eines menschlichen Auges die schwenkbeweglich gelagerten Beleuchtungsmodule, was ebenfalls den Eindruck von menschlichen Augen verstärkt. Dabei umfasst die bevorzugte Ausgestaltung der Erfindung mit Lichtumfängen, die die Beleuchtungsmodule nur teilweise umringen, auch Ausführungsformen, bei denen die Lichtumfänge nur oberhalb der Beleuchtungsmodule verlaufen, um so eine Augenbraue und/oder einen Lidstrich darzustellen. Es sind auch Lichtumfänge vorgesehen, die nach oben, unten oder zur Fahrzeugmitte hin geöffnet sind und/oder andere visuelle Charakteristiken eines menschlichen Auges nachbilden, wie insbesondere die Augenkontur und/oder einen Wimpernkranz. Die Umrahmung der Beleuchtungsmodule stellt demgegenüber die Iris eines menschlichen Auges dar. Die Umrahmung kann sich gemäß einer vorteilhaften Weiterbildung der Erfindung bis in die Seitenflächen der Beleuchtungsmodule erstrecken, wo die Umrahmung in einem beliebig vorgebbaren Muster mit mehreren Lichtelementen leuchten kann, beispielsweise mit beleuchteten Strichen oder Rhomben, womit die Struktur einer menschlichen Iris nachgebildet wird.

Die Beleuchtungsmodule weisen im Rahmen einer vorteilhaften Ausgestaltung der Erfindung nicht nur die als Positionslicht ausgestaltete Umrahmung auf, sondern beinhalten das Abblendlicht, das von der Umrahmung in zuvor beschriebener Weise vollständig oder zumindest teilweise umgriffen ist. Das Abblendlicht besitzt in der Regel eine oder mehrere Linsen und ist während der Willkommensillumination ausgeschaltet und wird allenfalls hiernach aktiv oder automatisch aktiviert.

Die beschriebene Willkommensillumination bietet dem autorisierten Benutzer nicht nur einen virtuellen Effekt, sondern durch den Ablauf der Willkommensillumination wird der autorisierte Benutzer unmittelbar darüber informiert, dass der kontaktlose Schlüssel funktionsfähig und einsatzbereit ist, so dass die geplante Fahrt unmittelbar gestartet werden kann.

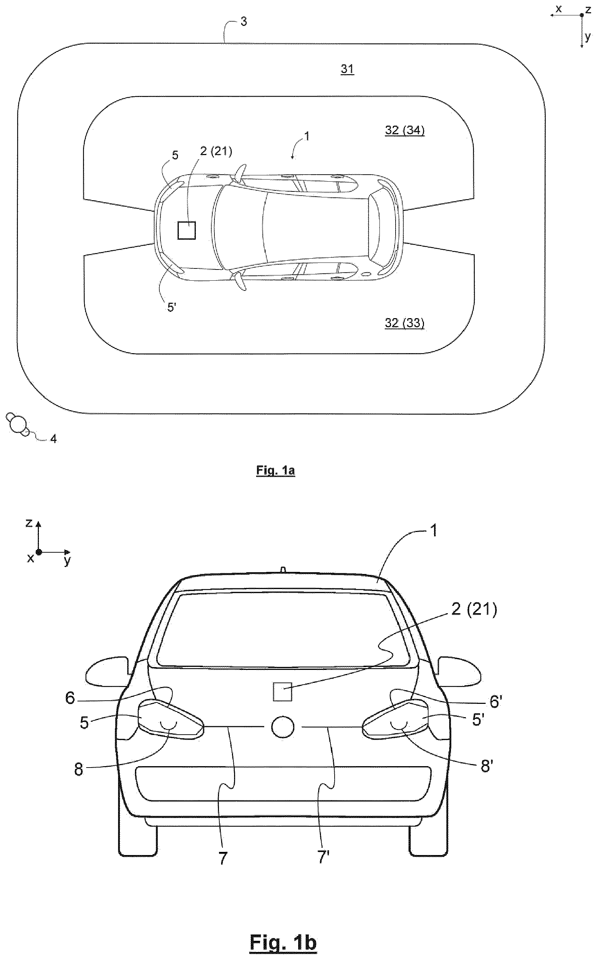

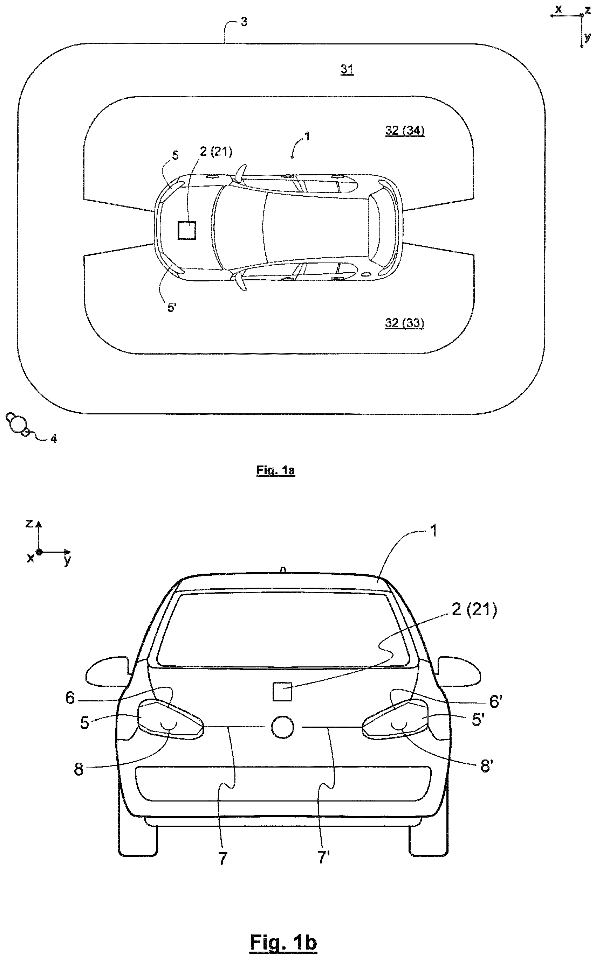

Weitere bevorzugte Ausgestaltungen der vorliegenden Erfindung sowie konkrete Ausführungsformen werden nachfolgend mit Bezug auf die Figuren 1 a,b bis 7 a,b erläutert, die jeweils paarweise ein Fahrzeug in einer Draufsicht mit einem sich nähernden autorisierten Benutzer und ein Fahrzeug in einer Frontansicht mit der jeweils ablaufenden Illuminationssequenz darstellen, die von der Position des registrierten Benutzers abhängig ist.

Fig. 1a zeigt die Draufsicht auf ein Kraftfahrzeug 1, das mittels einer Autorisierungsvorrichtung 2 registriert, ob sich innerhalb einer Autorisierungszone 3 ein autorisierter Benutzer 4 befindet. Im vorliegenden Fall besteht die Autorisierungsvorrichtung 2 aus einem Sensor 21, der registriert, ob sich ein kontaktloser Schlüssel (nicht gezeigt) innerhalb der Autorisierungszone 3 befindet oder nicht, wobei der autorisierte Benutzer 4 den kontaktlosen Schlüssel mit sich führen muss, sofern eine Benutzung des Kraftfahrzeugs 1 beabsichtigt ist. In der dargestellten Situation ist der Benutzer 4 außerhalb der Autorisierungszone 3, weshalb das Fahrzeug 1 verriegelt ist und sich in einer Ruheposition befindet.

Fig. 1b zeigt das Kraftfahrzeug 1, das sich in der Ruheposition befindet, in einer Frontansicht. Das Kraftfahrzeug 1 besitzt in an sich bekannter Weise Scheinwerfer 5, 5', die links- und rechtsseitig an der Frontseite des Kraftfahrzeugs 1 angeordnet sind. Zusätzlich besitzt das Kraftfahrzeug 1 ein Positionslicht mit Lichtumfängen 6 6`, die im Bereich der Scheinwerfer 5, 5' V-förmig ausgebildet sind und ein nach außen hin offenes V bilden, so dass die Scheinwerfer 5, 5' zumindest abschnittsweise von den Lichtumfängen 6, 6' umringt sind. Die Lichtumfänge 6, 6' gehen jeweils in einen linearen Abschnitt 7, 7' über, die sich in horizontaler Richtung und quer zur Längsachse des Kraftfahrzeugs 1 erstrecken. In der dargestellten Ruheposition leuchten die Lichtumfänge 6, 6' nicht, was durch die dünnen Linienstärken der gezeigten Lichtumfänge 6,6` angedeutet ist.

Schließlich weisen die Scheinwerfer 5, 5' jeweils ein schwenkbeweglich gelagertes Beleuchtungsmodul 8, 8' auf, die in der dargestellten Ruheposition mit Bezug auf ein Fahrzeugkoordinatensystem nach unten geschwenkt sind und nicht leuchten. Die Beleuchtungsmodule 8, 8' umfassen jeweils eine Abblendlicht und eine Umrahmung, die dem Positionslicht zugeordnet ist.

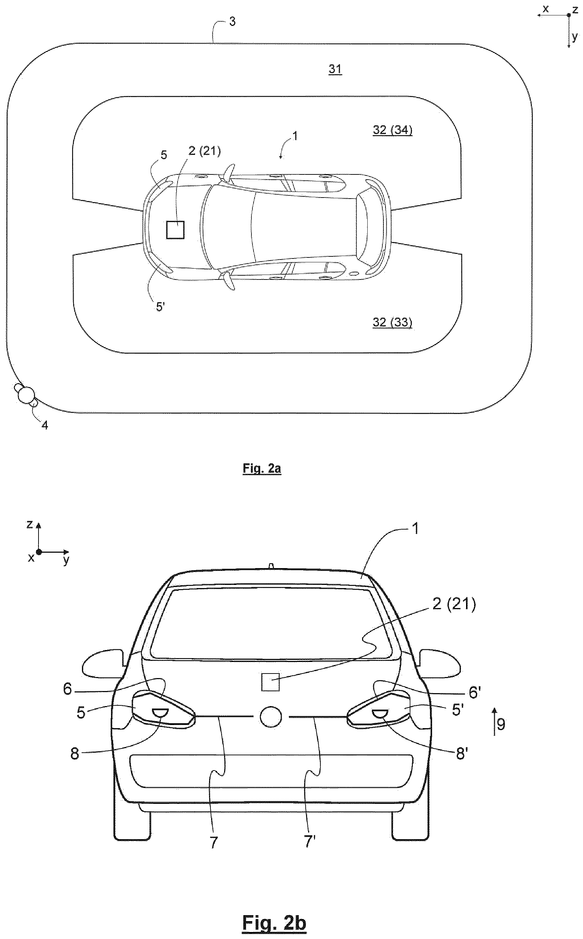

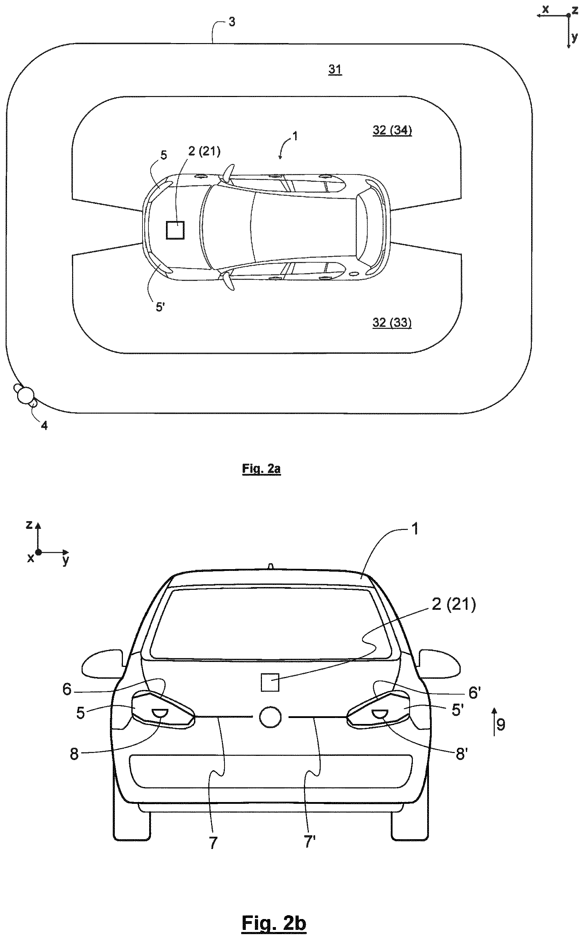

Fig. 2a zeigt, dass der autorisierte Benutzer 4 in die Autorisierungszone 3 eindringt, was von der Autorisierungsvorrichtung 2 registriert wird. Damit startet eine Willkommensillumination, die mehrere Illuminationssequenzen umfasst. Zunächst startet eine erste Illuminationssequenz, bei der die Lichtumfänge 6, 6' hochdimmen und bei der die schwenkbeweglich gelagerten Beleuchtungsmodule 8, 8' aus der nach unten gerichteten Ruheposition in Pfeilrichtung 9 nach oben schwenken, wobei die Beleuchtungsmodule 8, 8' bzw. deren Umrahmungen allmählich hochdimmen und die abgegebene Lichtstärke erhöhen (Fig. 2b). Die Erhöhung der Lichtstärken sind durch die zunehmende Linienstärke der Lichtumfänge 6, 6' und der Umrahmungen der Beleuchtungsmodule 8, 8' dargestellt. Die allmähliche Erhöhung der Lichtstärke sowie das Hochschwenken der Beleuchtungsmodule 8, 8' nimmt der autorisierte Benutzer 4 als "Augenöffnen" wahr.

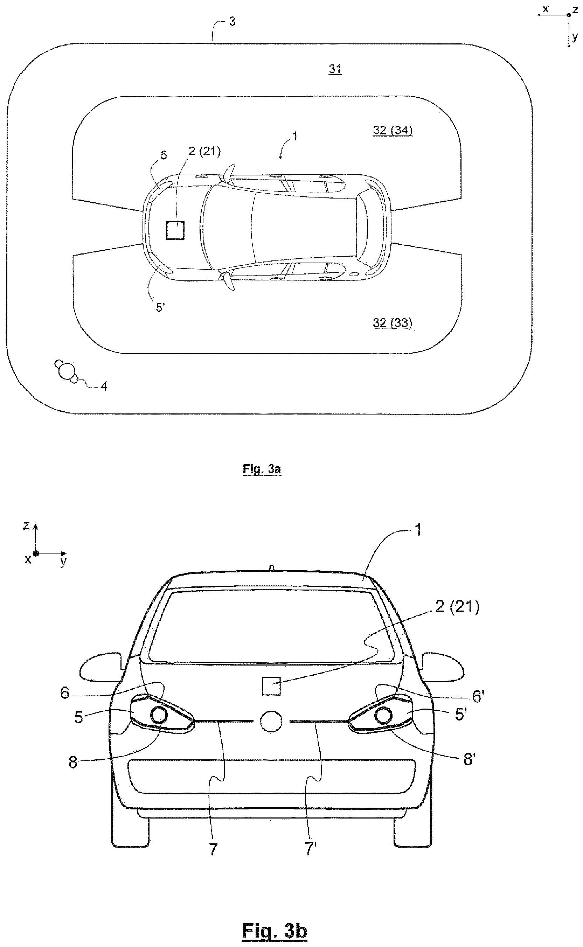

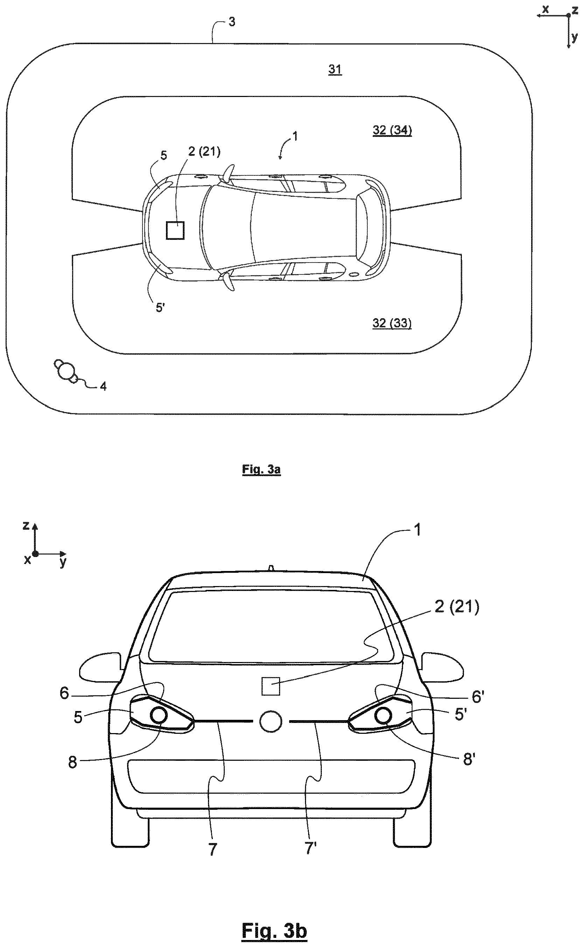

Fig. 3b zeigt die Beleuchtungsmodule 8, 8' in der horizontal ausgerichteten Fahrposition, womit die Darstellung des "Augenöffnens" und mithin die erste Illuminationssequenz abgeschlossen ist.

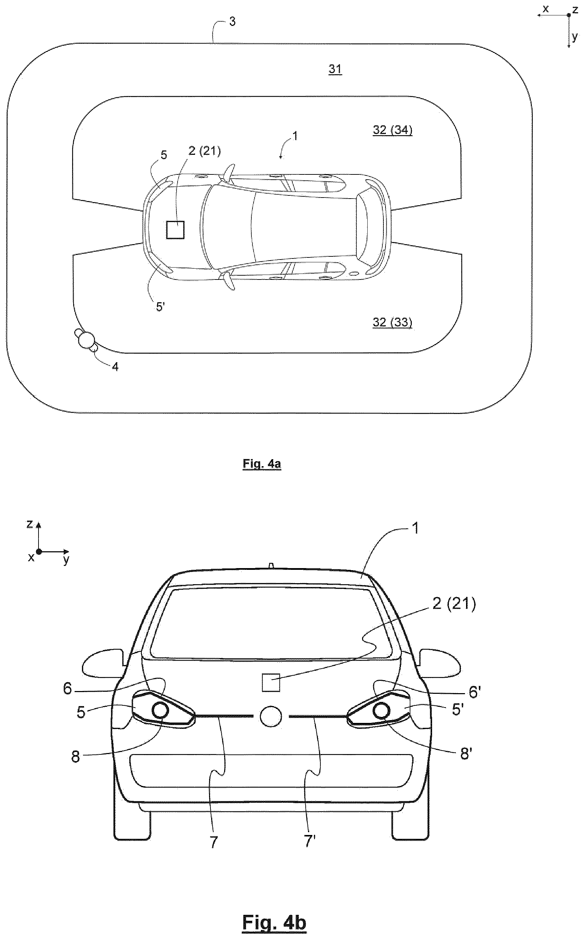

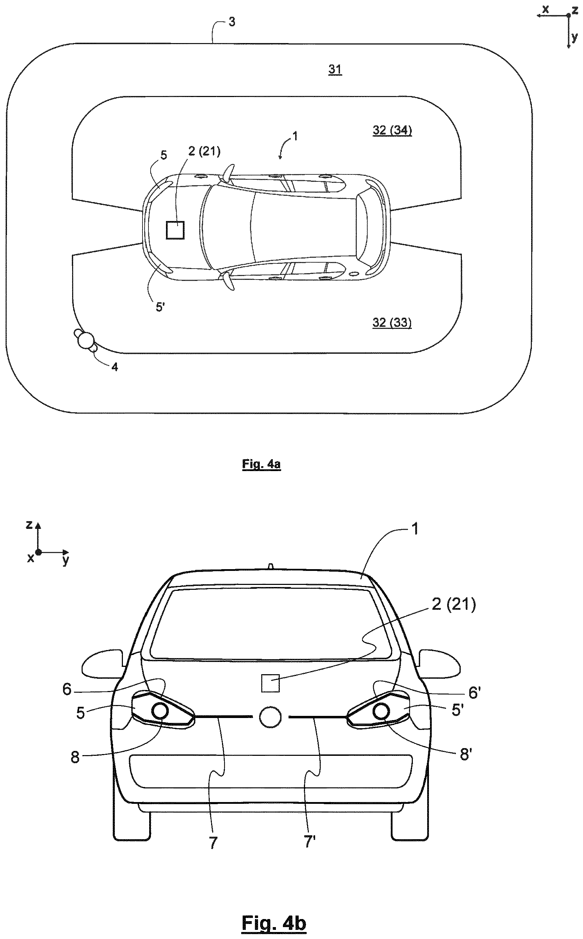

Die Autorisierungszone 3 ist in zwei Bereiche unterteilt, nämlich einer äußeren Zone 31 und einer inneren Zone 32, die vollständig von der äußeren Zone 31 umschlossen ist. Die innere Zone 32 wiederum ist ebenfalls in zwei Abschnitte/Bereiche 33, 34 unterteilt, die sich links- und rechtsseitig des Fahrzeugs erstrecken. Frontseitig und rechtsseitig des Kraftfahrzeugs sind diese Bereiche 33, 34 der inneren Zone 32 voneinander beabstandet, so dass diese Zwischenbereiche der äußeren Zone 31 zugeordnet sind. Sobald der autorisierte Benutzer 4 innerhalb der inneren Zone 33 registriert wird, wie es in Fig. 4a dargestellt ist, startet eine zweite Illuminationssequenz der Willkommensillumination, bei der zunächst bestimmt wird, in welcher Position sich der autorisierte Benutzer 4 gegenüber dem Kraftfahrzeug 1 befindet. Konkret wird registriert, ob der autorisierte Benutzer 4 im links- oder rechtsseitigen Bereich 33, 34 der inneren Zone 32 registriert wird.

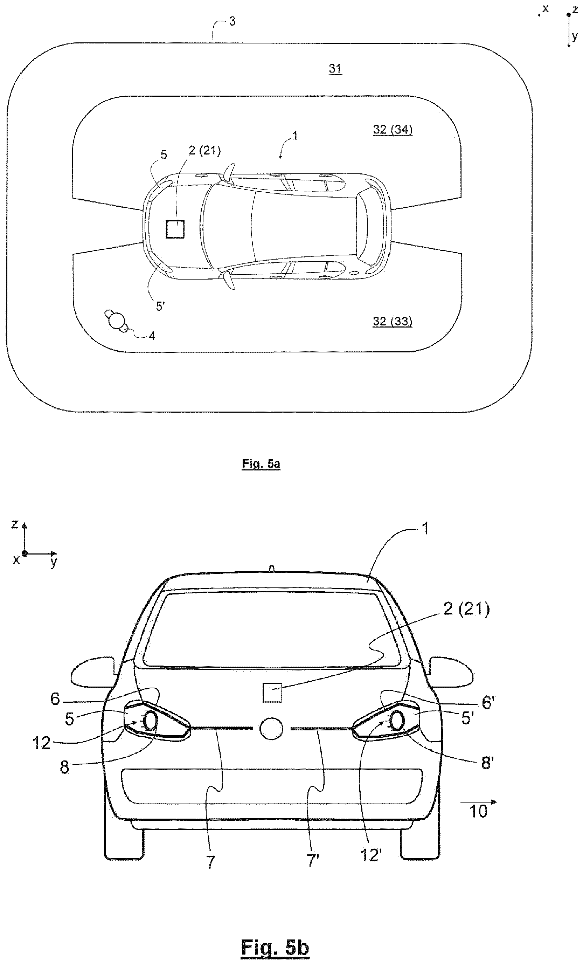

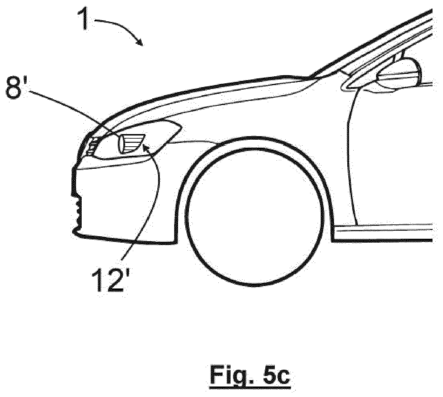

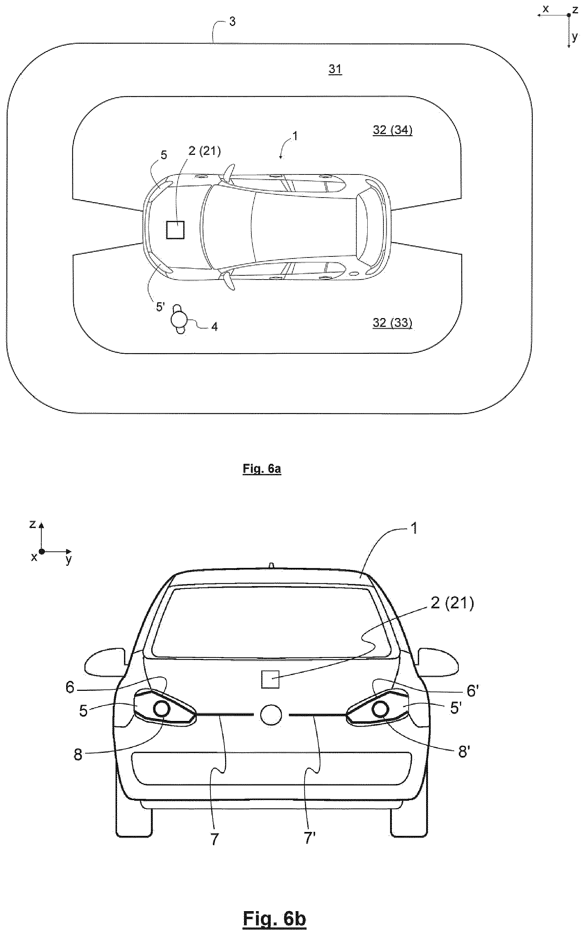

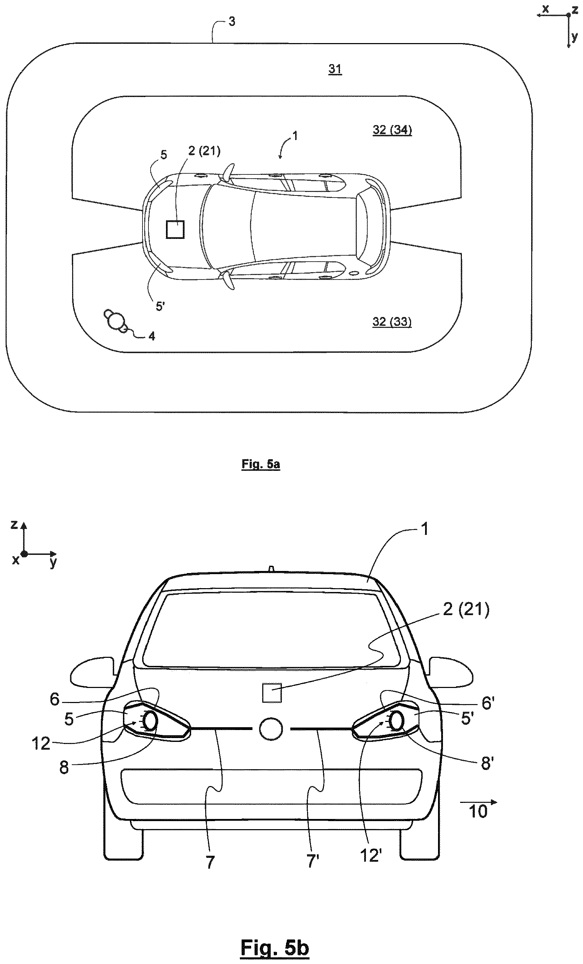

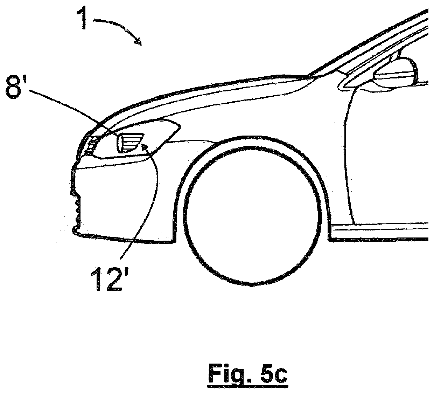

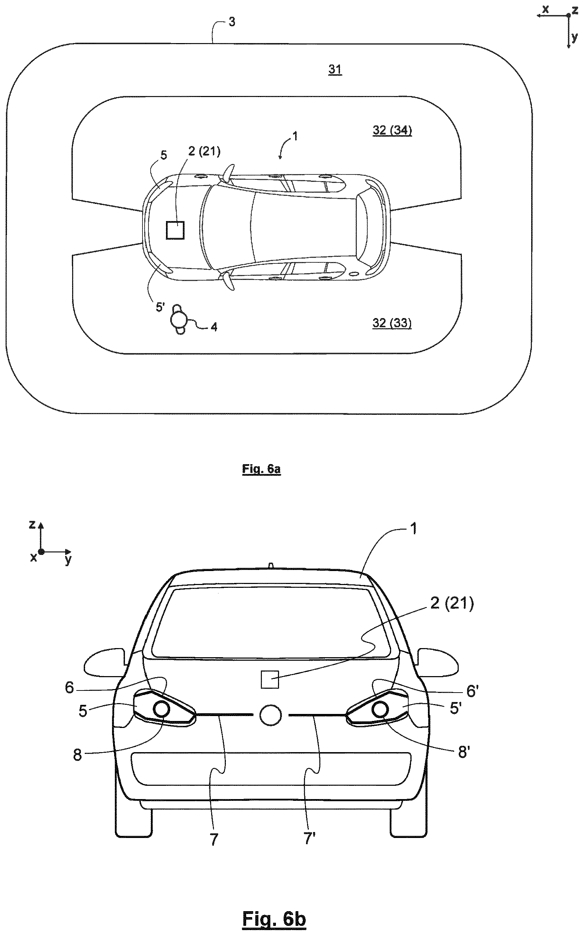

Fig. 5b zeigt, dass die schwenkbeweglichen Beleuchtungsmodule 8, 8' während der zweiten Illuminationssequenz vollständig in die Richtung des registrierten autorisierten Benutzers 4 schwenken (Pfeilrichtung 10). Hierdurch schaut das Kraftfahrzeug 1 den autorisierten Benutzer 4 an und begrüßt ihn mittels eines nachgeahmtem Blickkontaktes. Fig. 5b zeigt zudem, dass sich die beleuchtete Umrahmung der Beleuchtungsmodule 8, 8' bis in die Seitenflächen der Beleuchtungsmodule 8, 8' erstrecken, wo die Umrahmung linienhaft ausgebildet ist (Pfeile 12, 12'), wodurch sich der Eindruck einer menschlichen Iris verstärkt. Fig. 5c verdeutlicht diese Ausgestaltung in einer Seitenansicht. Anschließend schwenken die Beleuchtungsmodule 8, 8' zurück in die nach vorne ausgerichtete Fahrposition (Fig. 6a,b).

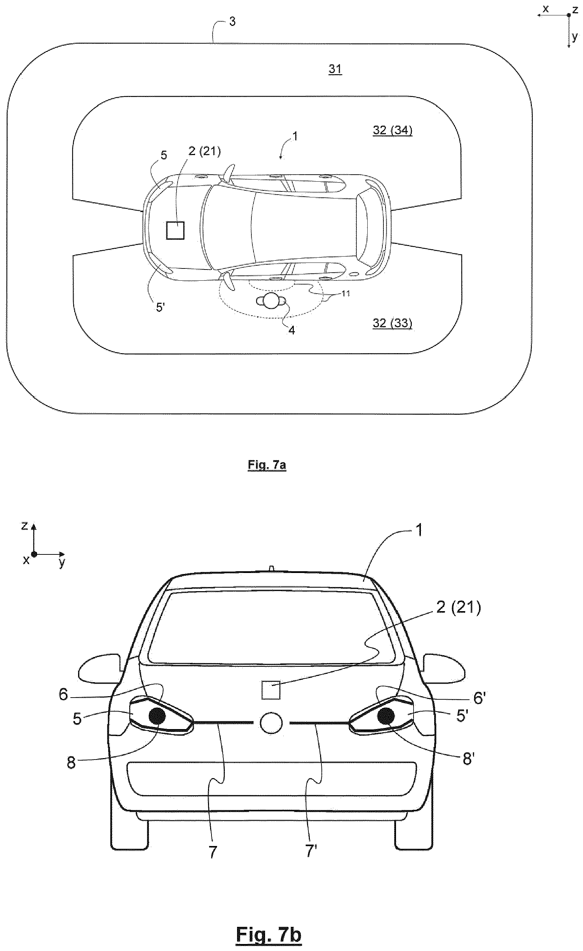

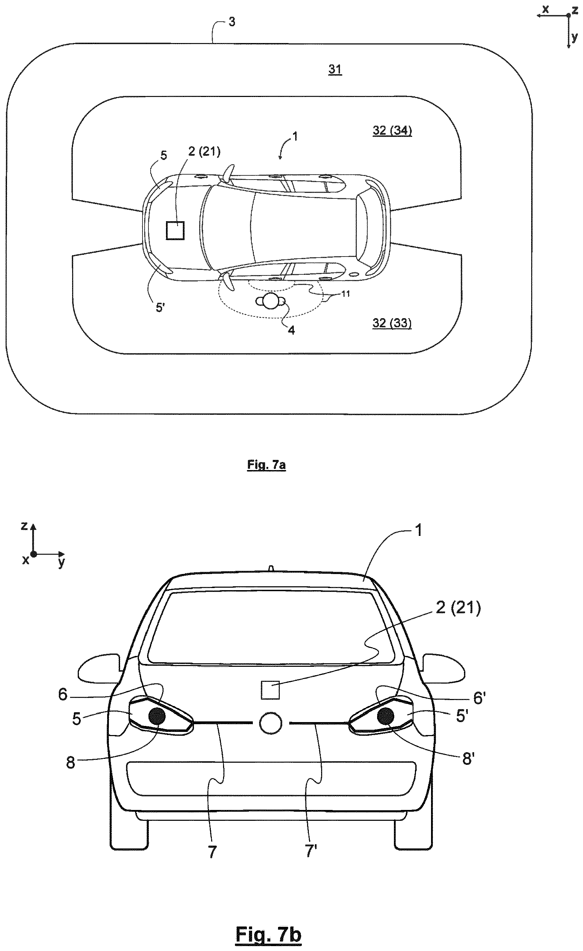

Wie in Fig. 7a, b dargestellt ist, befindet sich der autorisierte Benutzer 4 beim Abschluss der Willkommensillumination in der Regel unmittelbar vor der Fahrzeugtür. Die Willkommensillumination kann im Rahmen einer konkreten und bevorzugten Ausgestaltung der Erfindung eine Bodenprojektion 11 umfassen, die den Einstiegsbereich des Kraftfahrzeugs 1 auf den Boden projiziert. Ebenfalls ist vorzugsweise vorgesehen, dass mit dem Abschluss der Willkommensillumination unmittelbar das Abblendlicht angeschaltet wird, was durch die schwarz dargestellten Beleuchtungsmodule 8, 8' verdeutlicht wird.

### Bezugszeichenliste

- 1: Kraftfahrzeug
- 2: Autorisierungsvorrichtung
- 3: Autorisierungszone
- 31: äußere Zone
- 32: innere Zone
- 33: linksseitiger Bereich der inneren Zone
- 34: rechtsseitiger Beriech der inneren Zone
- 4: autorisierter Benutzer
- 5, 5`: Scheinwerfer
- 6, 6`: Lichtumfänge
- 7, 7': linearer Abschnitt
- 8, 8`: Beleuchtungsmodul
- 9: Pfeilrichtung (vertikale Verschwenkung)
- 10: Pfeilrichtung (horizontale Verschwenkung)
- 11: Bodenprojektion
- 12, 12': Pfeile (linienhafte Fortsetzung der Umrahmung)

## Patentansprüche

1. Verfahren zur Durchführung einer Willkommensillumination mit den Scheinwerfern (5, 5') eines Kraftfahrzeugs (1), die jeweils ein schwenkbares Beleuchtungsmodul (8, 8') aufweisen, deren Form zumindest im illuminierten Zustand menschliche Augen imitieren, mit folgenden Schritten:
a) Definieren einer Autorisierungszone (3) mit einem vorgebbaren Umkreis um das Kraftfahrzeug (1);
b) Registrieren, ob sich innerhalb der Autorisierungszone (3) mindestens ein autorisierter Benutzer (4) befindet;
c) Starten einer ersten Illuminationssequenz der Willkommensillumination, bei der die Beleuchtungsmodule (8, 8') mit Bezug auf ein Fahrzeugkoordinatensystem aus einer nach unten gerichteten Ruheposition in eine horizontal ausgerichtete Fahrposition schwenken;
d) Bestimmen der Position des autorisierten Benutzers (4) innerhalb der Autorisierungszone (3) mit Bezug auf das Fahrzeugkoordinatensystem; wobei das Verfahren **dadurch gekennzeichnet ist, dass** es den folgenden Schritt aufweist:
e) Starten einer zweiten Illuminationssequenz der Willkommensillumination, bei der die Beleuchtungsmodule (8, 8') zunächst in die Richtung des registrierten autorisierten Benutzers (5) schwenken und anschließend in die horizontal und nach vorne ausgerichtete Fahrposition zurückschwenken.

2. Verfahren nach Anspruch 1, **dadurch gekennzeichnet, dass** die Autorisierungszone (3) eine äußere Zone (31) aufweist und die erste Illuminationssequenz startet, wenn der autorisierte Benutzer (4) innerhalb der äußeren Zone (31) registriert wird.

3. Verfahren nach einem der Ansprüche 1 oder 2, **dadurch gekennzeichnet, dass** die Autorisierungszone (3) eine innere Zone (32) aufweist, die vollständig innerhalb der äußeren Zone (31) liegt, und die zweite Illuminationssequenz startet, wenn der autorisierte Benutzer (4) innerhalb der die inneren Zone (32) registriert wird.

4. Verfahren nach einem der Ansprüche 1 bis 3, **dadurch gekennzeichnet, dass** die innere Zone (32) zwei Bereiche aufweist, nämlich einen Bereich (33), der linksseitig des Kraftfahrzeugs (1) und einen Bereich (34), der rechtsseitig des Kraftfahrzeugs (1) angeordnet ist.

5. Verfahren nach einem der Ansprüche 1 bis 4, **dadurch gekennzeichnet, dass** die erste Illuminationssequenz der Willkommensillumination das Anschalten und Hochdimmen eines Positionslichtes umfasst, wobei das Positionslicht Lichtumfänge (6, 6`) und eine Umrahmung der Beleuchtungsmodule (8, 8') aufweist, wobei die Lichtumfänge (6, 6`)
a) die Beleuchtungsmodule (8, 8') vollständig oder teilweise umringen oder
b) einen zu den Seiten des Kraftfahrzeugs (1) hin offene V-Form aufweisen und
die Umrahmung der Beleuchtungsmodule (8, 8') die Beleuchtungsmodule (8, 8') vollständig oder teilweise umgreift, was den Eindruck von menschlichen Augen verstärkt.

6. Verfahren nach einem der Ansprüche 1 oder 2, **dadurch gekennzeichnet, dass** die zweite Illuminationssequenz der Willkommensillumination nach einer vorgebbaren Zeitspanne startet, nachdem die erste Illuminationssequenz der Willkommensillumination abgeschlossen ist.

7. Kraftfahrzeug mit einer Vorrichtung zur Durchführung des Verfahrens nach einem der Ansprüche 1 bis 5, wobei das Kraftfahrzeug (1) Scheinwerfer (5, 5') besitzt, die jeweils ein schwenkbares Beleuchtungsmodul (8, 8') aufweisen, die im illuminierten Zustand menschliche Augen imitieren und eingerichtet sind, um
a) während einer ersten Illuminationssequenz einer Willkommensillumination mit Bezug auf ein Fahrzeugkoordinatensystem aus einer nach unten gerichteten Ruheposition in eine horizontal ausgerichtete Fahrposition zu schwenken und
b) während einer zweiten Illuminationssequenz der Willkommensillumination in die Richtung eines registrierten und autorisierten Benutzers (4) zu schwenken und
c) anschließend in die horizontal und nach vorne ausgerichtete Fahrposition zurückzuschwenken.

8. Kraftfahrzeug nach Anspruch 7 **gekennzeichnet durch** eine Autorisierungsvorrichtung (2), die eingerichtet ist, um einen autorisierten Benutzer (4) innerhalb einer Autorisierungszone (3) zu registrieren sowie dessen Position innerhalb der Autorisierungszone (3) zu bestimmen.

9. Kraftfahrzeug nach einem der Ansprüche 7 oder 8, **gekennzeichnet durch** ein Positionslicht, das Lichtumfänge (6, 6`) und eine Umrahmung der Beleuchtungsmodule (8, 8') aufweist, wobei die Lichtumfänge (6, 6`)
a) die Beleuchtungsmodule (8, 8') vollständig oder teilweise umringen oder
b) eine zu den Seiten des Kraftfahrzeugs (1) hin offene V-Form aufweisen und
die Umrahmung der Beleuchtungsmodule (8, 8') die Beleuchtungsmodule (8, 8') vollständig oder teilweise umgreift, was den Eindruck von menschlichen Augen verstärkt, wobei das Positionslicht eingerichtet ist, um während der ersten Illuminationssequenz der Willkommensillumination angeschaltet und hochgedimmt zu werden.

## Claims

1. Method for implementing welcoming illumination with the headlamps (5, 5') of a motor vehicle (1), which each have a pivotable lighting module (8, 8'), the form of which imitate human eyes at least in the illuminated state, comprising the following steps:
a) defining an authorization zone (3) having a specifiable circumcircle around the motor vehicle (1);
b) registering whether at least one authorized user (4) is located within the authorization zone (3);
c) starting a first illumination sequence of the welcoming illumination, in which the lighting modules (8, 8') pivot, with respect to a vehicle coordinate system, out of a downwards rest position into a horizontally aligned driving position;
d) determining the position of the authorized user (4) within the authorization zone (3) with respect to the vehicle coordinate system; wherein the method is **characterized in that** it includes the following step:
e) starting a second illumination sequence of the welcoming illumination, in which the lighting modules (8, 8') initially pivot in the direction of the registered authorized user (5) and then pivot back into the driving position that is aligned horizontally and to the front.

2. Method according to Claim 1, **characterized in that** the authorization zone (3) has an outer zone (31), and the first illumination sequence starts when the authorized user (4) is registered within the outer zone (31) .

3. Method according to either of Claims 1 and 2, **characterized in that** the authorization zone (3) has an inner zone (32), which lies entirely within the outer zone (31), and the second illumination sequence starts when the authorized user (4) is registered within the inner zone (32).

4. Method according to any of Claims 1 to 3, **characterized in that** the inner zone (32) has two regions, specifically a region (33) which is arranged on the left side of the motor vehicle (1) and a region (34) which is arranged on the right side of the motor vehicle (1) .

5. Method according to any of Claims 1 to 4, **characterized in that** the first illumination sequence of the welcoming illumination comprises switching on and dimming up a position light, wherein the position light has light peripheries (6, 6') and a border around the lighting modules (8, 8'), wherein the light peripheries (6, 6')
a) completely or partially enclose the lighting modules (8, 8') or
b) have a V-shape that is open to the sides of the motor vehicle (1) and the border around the lighting modules (8, 8') completely or partially engages around the lighting modules (8, 8'), which reinforces the impression of human eyes.

6. Method according to either of Claims 1 and 2, **characterized in that** the second illumination sequence of the welcoming illumination starts after a specifiable time period after the first illumination sequence of the welcoming illumination has ended.

7. Motor vehicle having an apparatus for carrying out the method according to any of Claims 1 to 5, wherein the motor vehicle (1) has headlamps (5, 5'), which each have a pivotable lighting module (8, 8'), which in the illuminated state imitate human eyes and are configured to
a) pivot, with respect to a vehicle coordinate system, out of a downwards rest position into a horizontally aligned driving position during a first illumination sequence of a welcoming illumination, and
b) pivot in the direction of a registered and authorized user (4) during a second illumination sequence of the welcoming illumination and
c) then pivot back into the driving position that is aligned horizontally and to the front.

8. Motor vehicle according to Claim 7, **characterized by** an authorization apparatus (2), which is configured to register an authorized user (4) within an authorization zone (3) and to determine the position thereof within the authorization zone (3).

9. Motor vehicle according to either of Claims 7 and 8, **characterized by** a position light having light peripheries (6, 6') and a border around the lighting modules (8, 8'), wherein the light peripheries (6, 6')
a) completely or partially enclose the lighting modules (8, 8') or
b) have a V-shape that is open to the sides of the motor vehicle (1) and the border around the lighting modules (8, 8') completely or partially engages around the lighting modules (8, 8'), which reinforces the impression of human eyes, wherein the position light is configured to be switched on and dimmed up during the first illumination sequence of the welcoming illumination.

## Revendications

1. Procédé pour mettre en œuvre un éclairage de bienvenue au moyen des projecteurs (5, 5') d'un véhicule automobile (1) qui comprennent respectivement un module d'éclairage (8, 8') pivotant, dont la forme imite, au moins à l'état illuminé, des yeux humains, comprenant les étapes consistant à :
a) définir une zone d'autorisation (3) comprenant un pourtour prédéfinissable autour du véhicule automobile (1) ;
b) enregistrer si dans la zone d'autorisation (3) se trouve au moins un utilisateur autorisé (4) ;
c) démarrer une première séquence d'éclairage de l'éclairage de bienvenue au cours de laquelle les modules d'éclairage (8, 8') pivotent par rapport à un système de coordonnées du véhicule d'une position de repos orientée vers le bas jusqu'à une position de conduite orientée horizontalement ;
d) déterminer la position de l'utilisateur autorisé (4) à l'intérieur de la zone d'autorisation (3) par rapport au système de coordonnées du véhicule ; le procédé étant **caractérisé en ce qu'**il comprend l'étape consistant à :
e) démarrer une deuxième séquence d'éclairage de l'éclairage de bienvenue au cours de laquelle les modules d'éclairage (8, 8') pivotent d'abord dans la direction de l'utilisateur autorisé (5) enregistré et pivotent ensuite à nouveau dans la position de conduite orientée horizontalement vers l'avant.

2. Procédé selon la revendication 1, **caractérisé en ce que** la zone d'autorisation (3) comprend une zone extérieure (31) et **en ce que** la première séquence d'éclairage démarre lorsque l'utilisateur autorisé (4) est enregistré à l'intérieur de la zone extérieure (31).

3. Procédé selon l'une des revendications 1 ou 2, **caractérisé en ce que** la zone d'autorisation (3) comprend une zone intérieure (32) qui est située entièrement à l'intérieur de la zone extérieure (31), et **en ce que** la deuxième séquence d'éclairage démarre lorsque l'utilisateur autorisé (4) est enregistré à l'intérieur de la zone intérieure (32).

4. Procédé selon l'une des revendications 1 à 3, **caractérisé en ce que** la zone intérieure (32) comprend deux régions, à savoir une région (33) qui est située du côté gauche du véhicule automobile (1) et une région (34) qui est située du côté droit du véhicule automobile (1).

5. Procédé selon l'une des revendications 1 à 4, **caractérisé en ce que** la première séquence d'éclairage de l'éclairage de bienvenue comprend l'allumage et l'augmentation de luminosité d'un feu de position, le feu de position comprenant des circonférences lumineuses (6, 6') et un encadrement des modules d'éclairage (8, 8'), les circonférences lumineuses (6, 6')
a) entourant entièrement ou partiellement les modules d'éclairage (8, 8') ou
b) présentant une forme en V ouverte vers les côtés du véhicule automobile (1) et l'encadrement des modules d'éclairage (8, 8') entourant entièrement ou partiellement les modules d'éclairage (8, 8'), accentuant ainsi l'impression d'yeux humains.

6. Procédé selon l'une des revendications 1 ou 2, **caractérisé en ce que** la deuxième séquence d'éclairage de l'éclairage de bienvenue démarre après une période de temps prédéfinissable, après que la première séquence d'éclairage de l'éclairage de bienvenue s'est achevée.

7. Véhicule automobile comprenant un dispositif pour mettre en œuvre le procédé selon l'une des revendications 1 à 5, le véhicule automobile (1) possédant des projecteurs (5, 5') qui comprennent respectivement un module d'éclairage pivotant (8, 8') et qui imitent, à l'état illuminé, des yeux humains et sont conçus pour
a) au cours d'une première séquence d'éclairage d'un éclairage de bienvenue, pivoter par rapport à un système de coordonnées du véhicule d'une position de repos orientée vers le bas jusqu'à une position de conduite orientée horizontalement et
b) au cours d'une deuxième séquence d'éclairage de l'éclairage de bienvenue, pivoter dans la direction d'un utilisateur enregistré et autorisé (4) et
c) pivoter ensuite à nouveau dans la position de conduite orientée horizontalement vers l'avant.

8. Véhicule automobile selon la revendication 7, **caractérisé par** un dispositif d'autorisation (2) qui est conçu pour enregistrer un utilisateur autorisé (4) à l'intérieur d'une zone d'autorisation (3) ainsi que pour déterminer sa position à l'intérieur de la zone d'autorisation (3).

9. Véhicule automobile selon l'une des revendications 7 ou 8, **caractérisé par** un feu de position comprenant des circonférences lumineuses (6, 6') et un encadrement des modules d'éclairage (8, 8'), les circonférences lumineuses (6, 6')
a) entourant entièrement ou partiellement les modules d'éclairage (8, 8') ou
b) comprenant une forme en V ouverte vers les côtés du véhicule automobile (1) et l'encadrement des modules d'éclairage (8, 8') entourant entièrement ou partiellement les modules d'éclairage (8, 8'), accentuant ainsi l'impression d'yeux humains, le feu de position étant conçu pour être allumé et pour être soumis à une augmentation d'intensité au cours de la première séquence d'éclairage de l'éclairage de bienvenue.
